# EUROPEAN PATENT SPECIFICATION

(11) **EP 3 916 291 B1**
(45) Date of publication and mention of the grant of the patent: **20.12.2023**
(21) Application number: 21176186.1
(22) Date of filing: 27.05.2021
(51) Int. Cl.: F21S 41/143, F21S 41/148, F21S 41/265, F21S 41/32, F21S 41/43, F21S 41/663, F21S 41/29, F21S 43/14, F21S 43/15, F21S 43/20, F21S 41/151

(54) **HEADLAMP DEVICE FOR A VEHICLE**
SCHEINWERFERVORRICHTUNG FÜR EIN FAHRZEUG
DISPOSITIF DE PHARE POUR VÉHICULE

(30) Priority: 28.05.2020 TW 109117879
(43) Date of publication of application: 01.12.2021
(73) Proprietor: Hua Xin Optronics Co., East Dist. 300 Hsinchu City (TW)
(72) Inventor: HUANG, I-Liang, 300 HSINCHU CITY (TW); GUAN, You-Kang, 352 MIAOLI COUNTY (TW)
(74) Representative: Regimbeau

(56) References cited:
- EP-A1- 2 921 769
- EP-A1- 3 236 137
- US-A1- 2009 290 371
- US-A1- 2011 205 748
- US-A1- 2014 218 939
- US-A1- 2015 252 975
- US-A1- 2017 158 113

## Description

The invention relates to a headlamp device capable of emitting low beam and high beam light rays as known from US 2017/158113 A1.

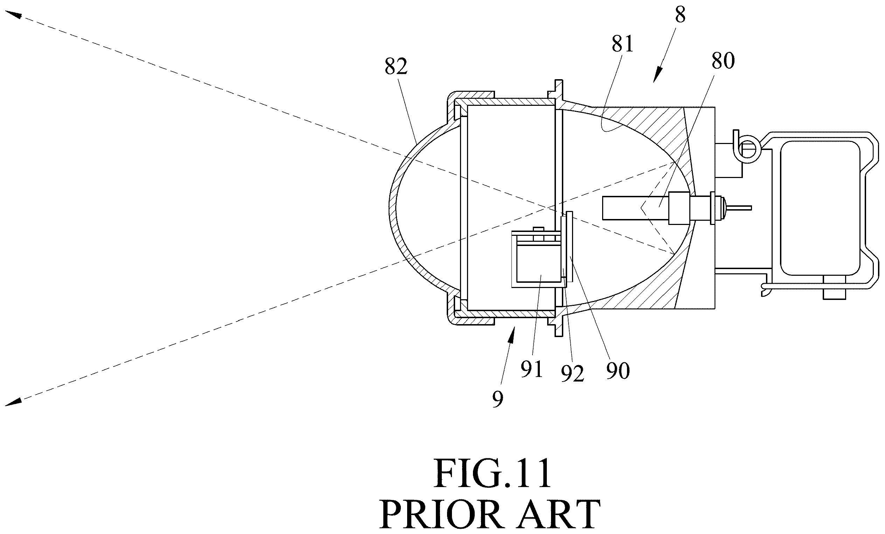

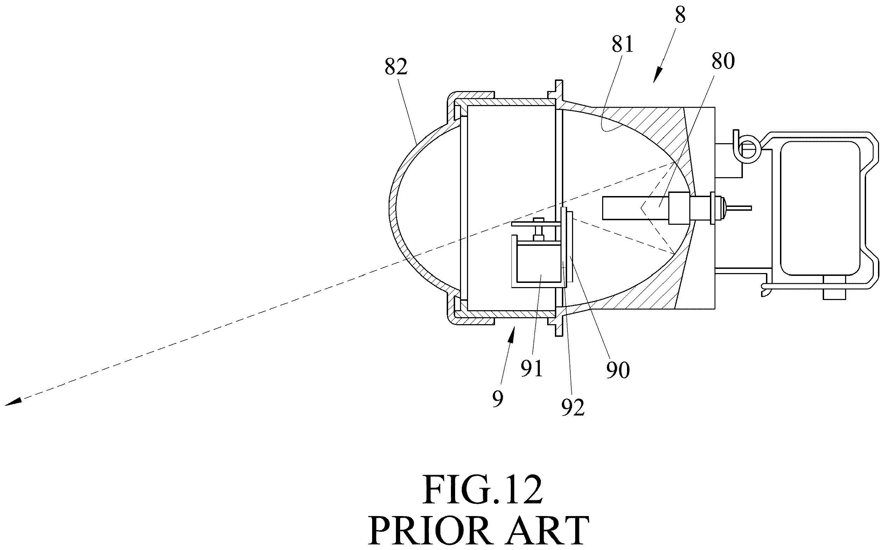

Referring to Figures 11 and 12, a conventional headlamp device disclosed in Taiwanese Utility Model Patent No. M248960 includes a headlamp 8 and a headlight function switching device 9. The headlamp 8 includes a light emitting member 80, a reflecting member 81 and a lens 82. The light emitting member 80 generates light beams. The reflecting member 81 and the lens 82 are respectively located at two opposite sides of the light emitting member 80. The headlight function switching device 9 is disposed between the light emitting member 80 and the lens 82, and includes a fixed plate 90, a solenoid valve 91 and a blocking board 92. The solenoid valve 91 is fixedly mounted to the fixed plate 90. The blocking board 92 is operable by the solenoid valve 91 to move relative to the light emitting member 80 in an up-down direction between an upper position and a lower position. When the blocking board 92 is at the upper position, the light beams generated by the light emitting member 80 are reflected by the reflecting member 81 and propagate in such a manner that some of the light beams are blocked by the blocking board 92 while the remaining light beams pass through the lens 82 to serve as low beam light rays (see Figure 12) which form a light distribution pattern that has a clear cut-off line. When the blocking board 92 is at the lower position, the light beams generated by the light emitting member 80 are reflected by the reflecting member 81 and pass through the lens 82 without being blocked by the blocking board 92, so as to serve as high beam light rays (see Figure 11).

By virtue of the solenoid valve 91 controlling the blocking board 92 to move between the upper position and the lower position, the conventional headlamp device is switchable between a low beam mode where the low beam light rays are generated and a high beam mode where the high beam light rays are generated. However, the solenoid valve 91 may be slow to react to user input and is prone to malfunction. Once the solenoid valve 91 has malfunctioned, the conventional headlamp device can no longer switch between the low beam mode and the high beam mode.

Therefore, an object of the invention is to provide a headlamp device that can alleviate at least one of the drawbacks of the prior art.
According to the invention, a headlamp device with the features of claim 1 is provided.

Other features and advantages of the invention will become apparent in the following detailed description of the embodiments with reference to the accompanying drawings, of which:
Figure 1 is a perspective view of a first embodiment of a headlamp device according to the invention
Figure 2 is a partly exploded perspective view of the first embodiment;
Figure 3 is a sectional view taken along line III - III in Figure 1;
Figure 4 is a sectional view taken along line IV - IV in Figure 3;
Figure 5 is a sectional view, similar to Figure 3, illustrating several representative light beams that are generated by the first embodiment;
Figure 6 is a contour plot illustrating light distribution that is formed by low beam light rays generated by the first embodiment;
Figure 7 is a contour plot illustrating light distribution that is formed by high beam light rays generated by the first embodiment;
Figure 8 is a partly exploded perspective view of a second embodiment of the headlamp device according to the invention;
Figure 9 is a sectional view illustrating several representative light beams that are generated by the second embodiment;
Figure 10 is a contour plot illustrating light distribution that is formed by daytime running light rays generated by the second embodiment;
Figure 11 is a sectional view illustrating a conventional headlamp device when emitting high beam light rays; and
Figure 12 is another sectional view illustrating the conventional headlamp device when emitting low beam light rays.

Before the invention is described in greater detail, it should be noted that where considered appropriate, reference numerals or terminal portions of reference numerals have been repeated among the figures to indicate corresponding or analogous elements, which may optionally have similar characteristics.

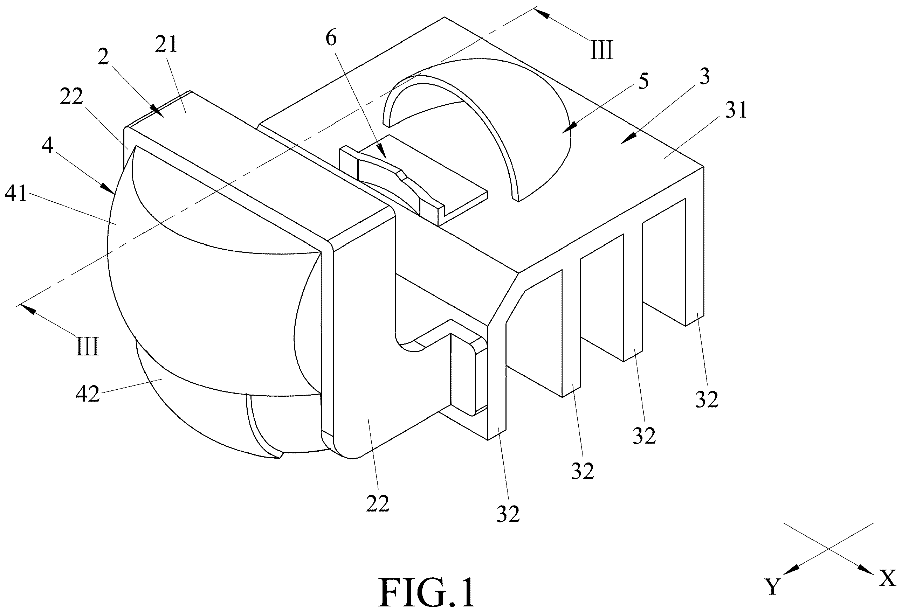

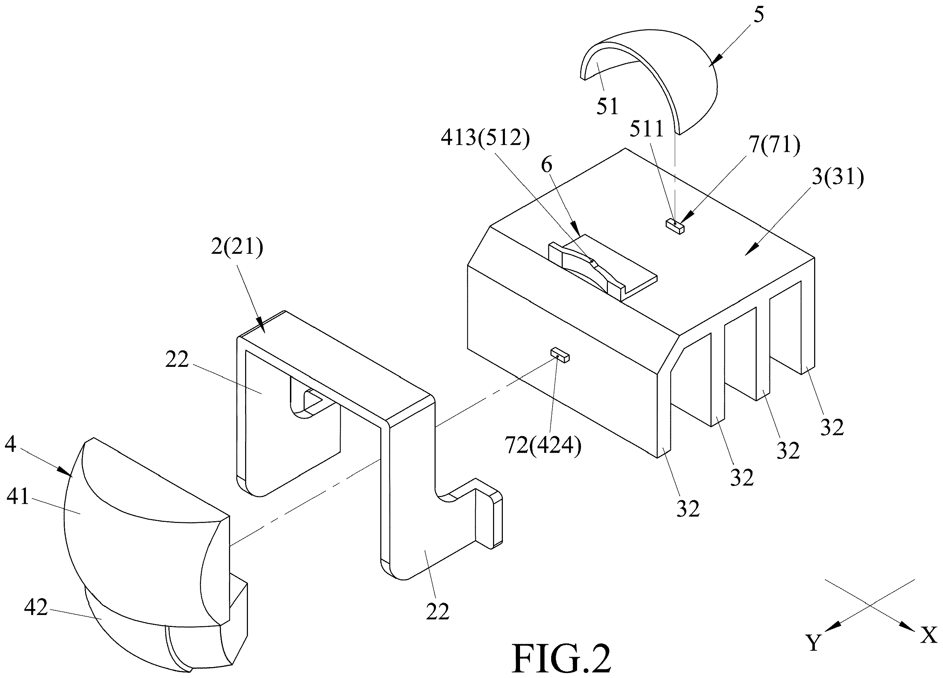

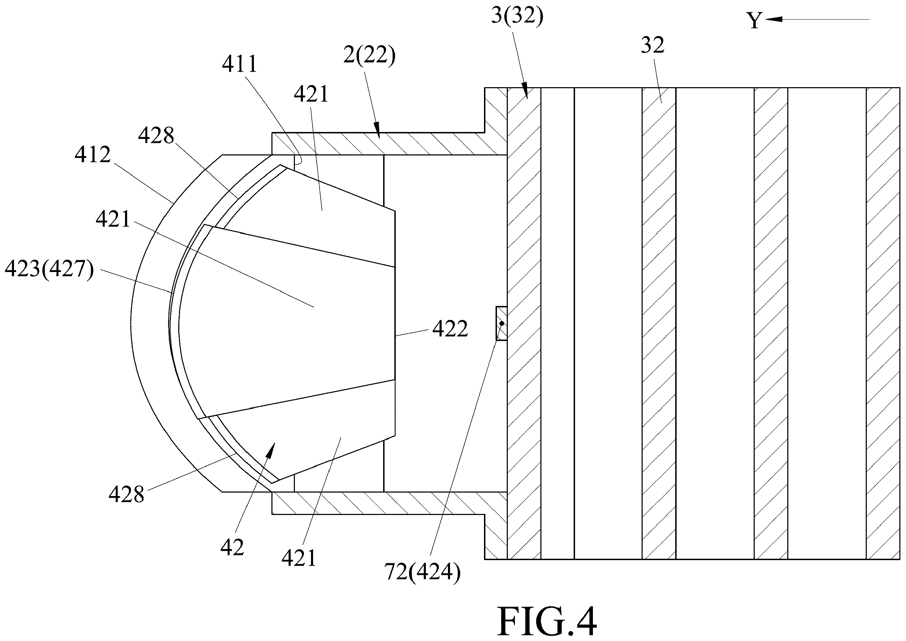

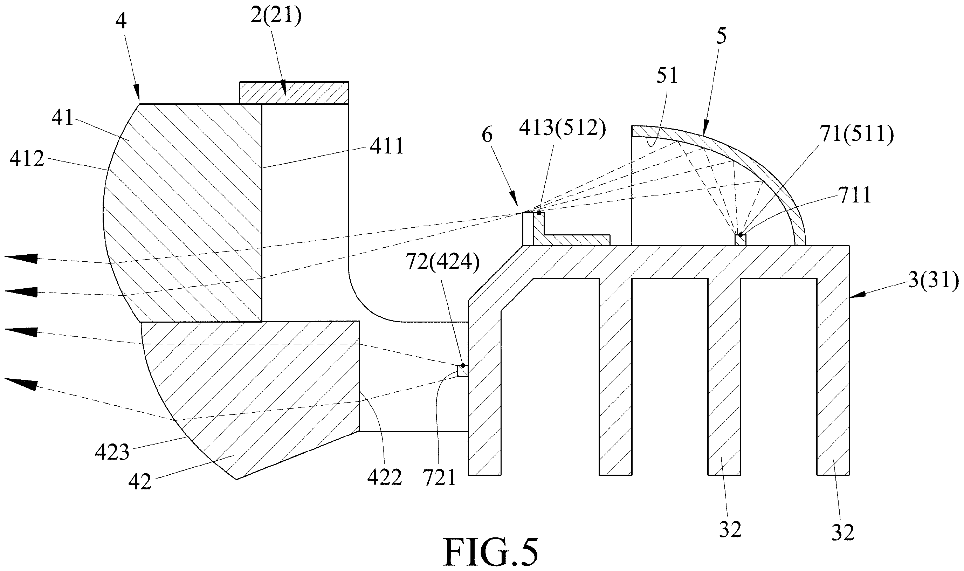

Referring to Figures 1 to 5, a first embodiment of a headlamp device according to the invention includes a compound lens unit 4, a heat dissipating member 3, a reflector 5, a blocking board 6 and a light emitting unit 7.

The compound lens unit 4 includes an upper lens 41 and a lower lens assembly 42. The upper lens 41 has an optical axis (A), an upper light-incident surface 411, an upper light-emergent surface 412 and an upper focal point 413. The upper light-incident surface 411 and the upper light-emergent surface 412 are respectively located at two opposite sides of the upper lens 41 in a direction (Y) of the optical axis (A) . In this embodiment, the upper light-emergent surface 412 is in front of the upper light-incident surface 411 with "front" being the forward-facing side of the headlamp device. The upper focal point 413 is located at one side of the upper light-incident surface 411 opposite to the upper light-emergent surface 412.

The lower lens assembly 42 is located below the optical axis (A) of the upper lens 41, includes three lower lenses 421, and has a lower light-incident surface 422, a lower light-emergent surface 423 and a first lower focal point 424. In this embodiment, the lower lenses 421 and the upper lens 41 are formed as one-piece. The lower light-incident surface 422 is cooperatively formed by the lower lenses 421, faces in a direction that is the same as that of the upper light-incident surface 411 of the upper lens 41, and is offset from the upper light-incident surface 411 of the upper lens 41 in the direction (Y) of the optical axis (A) (i.e., the lower light-incident surface 422 is not flush with the upper light-incident surface 411) . Specifically, the lower light-incident surface 422 is rearwardly offset from the upper light-incident surface 411. The lower light-emergent surface 423 of the lower lens assembly 42 is cooperatively formed by the lower lenses 421, is opposite to the lower light-incident surface 422 in the direction (Y) of the optical axis (A) of the upper lens (41), and has a first section 427 and two second sections 428. The second sections 428 are respectively located at two opposite sides of the first section 427 in a transverse direction (X) transverse to the direction (Y) of the optical axis (A), and are offset from the first section 427 in the direction (Y) of the optical axis (A) (i.e., the lower light-emergent surface 423 is configured to not be a smooth surface) . Specifically, the second sections 428 are rearwardly offset from the first section 427 in such a way that the second sections 428 are recessed relative to the first section 427. The first lower focal point 424 of the lower lens assembly 42 is located at one side of the lower light-incident surface 422 opposite to the lower light-emergent surface 423, and is located below the optical axis (A) . The first section 427 of the lower light-emergent surface 423 is formed by one of the lower lenses 421 of the lower lens assembly 42, and the second sections 428 of the lower light-emergent surface 423 are respectively formed by the other two of the lower lenses 421. The one of the lower lenses 421 that forms the first section 427 corresponds with the first lower focal point 424 of the lower lens assembly 42.

The heat dissipating member 3 is where the reflector 5, the blocking board 6 and the light emitting unit 7 are disposed on. The heat dissipating member 3 includes a base 31 and four fins 32. The base 31 extends in the transverse direction (X) . The fins 32 are spaced apart from each other in the direction (Y) of the axis (A), and each of the fins 32 extends downwardly from the base 31. In the first embodiment, the first lower focal point 424 of the lower lens assembly 42 is substantially located at one of the fins 32 that is closest to the lower light-emergent surface 423 of the lower lens assembly 42.

The reflector 5 is located at one side of the upper focal point 413 of the upper lens 41 opposite to the upper light-incident surface 411 of the upper lens 41. The reflector 5 has a reflecting surface 51. The reflecting surface 51 is arc-shaped, and has a first reflecting focal point 511 and a second reflecting focal point 512. The first and second reflecting focal points 511, 512 are respectively distal from and proximate to the upper light-incident surface 411 of the upper lens 41. The second reflecting focal point 512 coincides with the upper focal point 413 of the upper lens 41.

The blocking board 6 is located on the heat dissipating member 3 and has a top end at which the second reflecting focal point 512 is located.

The light emitting unit 7 includes a first light source 71 and a second light source 72. The first light source 71 is located on the heat dissipating member 3, substantially coincides with the first reflecting focal point 511 of the reflector 5 and has a first light emitting surface 711 facing upwardly. The second light source 72 substantially coincides with the first lower focal point 424 of the lower lens assembly 42 and has a second light emitting surface 721. The second light emitting surface 721 faces toward the lower light-incident surface 422 of the lower lens assembly 42. Each of the first light source 71 and the second light source 72 is operable to switch between an on-state in which light beams are generated, and an off-state in which light beams cease to be generated. It is noted that the light emitting unit 7 is a light-emitting diode made of at least one semiconductor die.

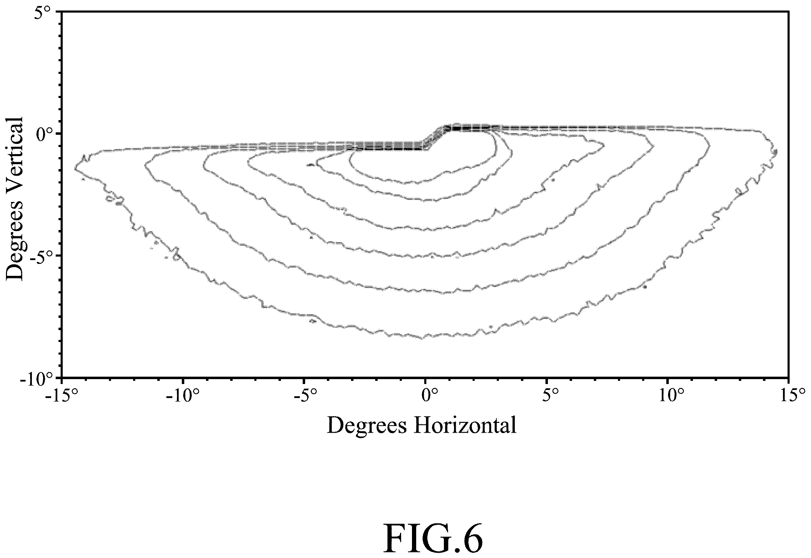

Referring further to Figure 6, when the first light source 71 is in the on-state and when the second light source 72 is in the off-state, the light beams generated by the first light source 71 are reflected by the reflecting surface 51 of the reflector 5 such that some of the light beams are blocked by the blocking board 6 (i.e., some of the reflected light beams that do not perfectly pass through the second reflecting focal point 512 of the reflecting surface 51 are blocked by the blocking board 6) while the remaining light beams travel into the upper lens 41 through the upper light-incident surface 411 and exit the upper lens 41 through the upper light-emergent surface 412 to serve as low beam light rays. By virtue of the blocking board 6 blocking some of the light beams, light distribution pattern formed by the low beam light rays has a clear cut-off line as shown in Figure 6.

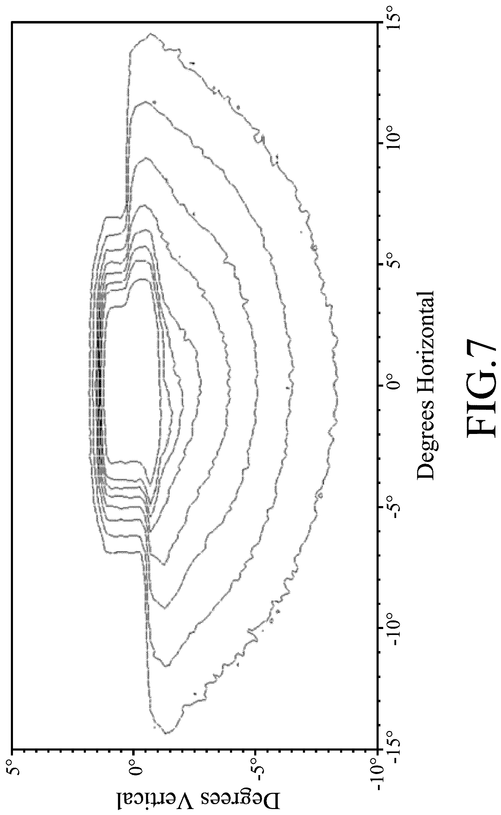

Referring further to Figure 7, when the second light source 72 and the first light source 71 are in the on-state, the light beams generated by the second light source 72 travel into the lower lens assembly 42 through the lower light-incident surface 422, and exit the lower lens assembly 42 through the lower light-emergent surface 423, so as to cooperate with the light beams exiting the upper lens 41 through the upper light-emergent surface 412 to serve as high beam light rays. Light distribution pattern formed by the high beam light rays is shown in Figure 7. In this embodiment, the light beams that exit the lower lens assembly 42 through the lower light-emergent surface 423 may tend to converge.

It is noted that, by virtue of the lower light-incident surface 422 of the lower lens assembly 42 being rearwardly offset from the upper light-incident surface 411 of the upper lens 41, clear aperture of the compound lens unit 4 may be reduced, and the compound lens unit 4 may provide relatively good stray-light rejection when the low beam light rays are generated. That is to say, when the first light source 71 is in the on-state and when the second light source 72 is in the off-state, light beams generated by the first light source 71 but traveling in undesirable paths (namely, stray light) may be refracted by the lower lens assembly 42. Furthermore, a smaller clear aperture of the compound lens unit 4 may prevent more stray light from exiting the upper lens 41 through the upper light-emergent surface 412. Therefore, stray light will not substantially affect the light distribution pattern formed by the low beam light rays . In this embodiment, a distance between the upper light-incident surface 411 of the upper lens 41 and the lower light-incident surface 422 of the lower lens assembly 42 in the direction (Y) of the optical axis (A) ranges from 5 to 30 millimeters. Consequently, in comparison with an aspheric lens having only one light-incident surface, the compound lens unit 4 may have a relatively small clear aperture of a minimum of 55 millimeters.

Moreover, since each of the first section 427 and the second sections 428 of the lower light-emergent surface 423 is formed by the corresponding one of the lower lenses 421 of the lower lens assembly 42, curvature of each of the first section 427 and the second sections 428 is individually adjustable. In some embodiments, the curvature of each of the first section 427 and the second sections 428 is adjustable by replacing the corresponding one of the lower lenses 421 with a lens of a different curvature. By adjusting the curvature of each of the first section 427 and the second sections 428, when the high beam light rays are generated, the lower lens assembly 42 may achieve a better effect of focusing light than an aspheric lens that has a light-emergent surface without offset sections (i.e., the light-emergent surface of the aspheric lens is configured to be a smooth surface). Additionally, by adjusting the curvature of the first section 427 and the second sections 428, a degree of overlap between the light beams exiting the upper lens 41 through the upper light-emergent surface 412 and the light beams exiting the lower lens assembly 42 through the lower light-emergent surface 423 may be adjusted to be relatively high so that the light distribution pattern formed by the high beam light rays is not dispersed. In addition, for a conventional headlamp device, a reflector cup and an additional light source are necessary to generate high beam light rays. Consequently, the conventional headlamp device tends to be larger in size. However, by virtue of including the lower lens assembly 42 with a light-emergent surface having offset sections whose curvatures are each adjustable, the headlamp device of this disclosure may generate the high beam light rays without a reflector cup. The headlamp device therefore has a relatively small size and a relatively wide range of usage in related industries.

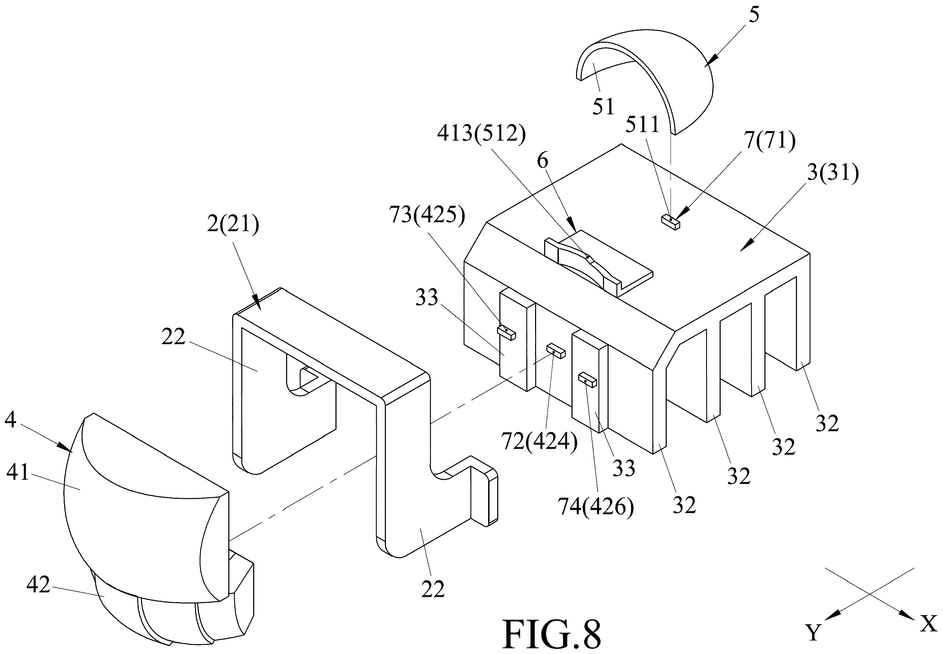

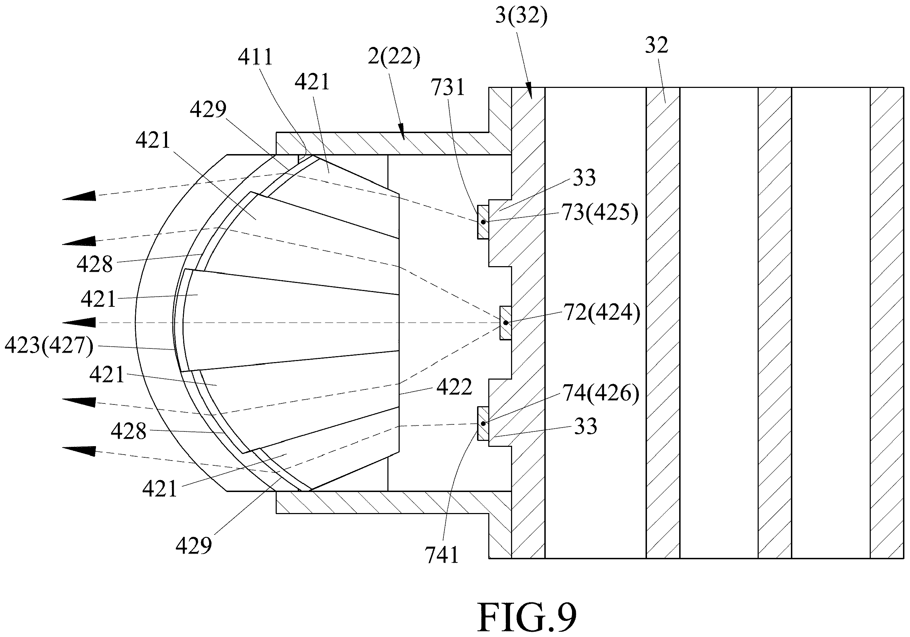

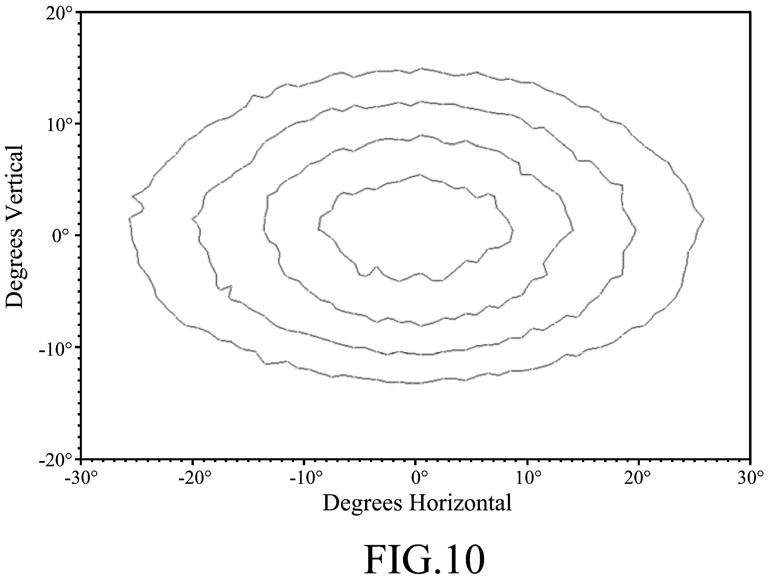

Referring to Figures 8 to 10, a second embodiment of the headlamp device according to the invention is similar to the first embodiment. Differences between the first embodiment and the second embodiment are described below.

In the second embodiment, the heat dissipating member 3 further includes two protrusions 33 that are located at the one of the fins 32 of the heat dissipating member 3 closest to the lower light-emergent surface 423 of the lower lens assembly 42, that are spaced apart from each other in the transverse direction (X), and that extend toward the compound lens unit 4.

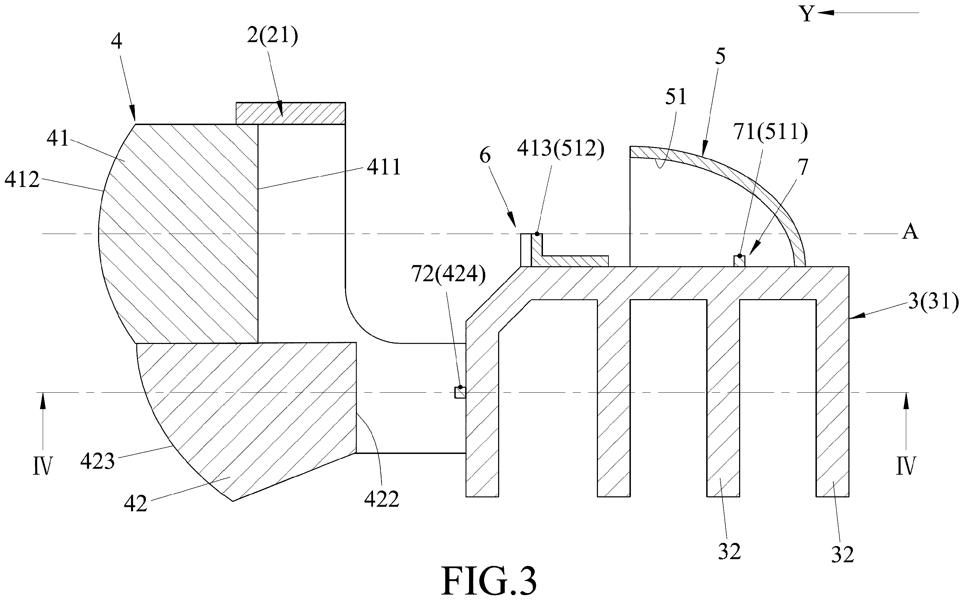

The lower lens assembly 42 further has a second lower focal point 425 and a third lower focal point 426 respectively located at two opposite sides of the first lower focal point 424 of the lower lens assembly 42 in the transverse direction (X). The second lower focal point 425 and the third lower focal point 426 are configured to not be on an imaginary plane that is perpendicular to the optical axis (A, with reference to Figure 3) and that contains the first lower focal point 424. In this embodiment, the first lower focal point 424 is located between the protrusions 33 of the heat dissipating member 3, and the second lower focal point 425 and the third lower focal point 426 are respectively and substantially located at the protrusions 33 in a manner that the second lower focal point 425 and the third lower focal point 426 are located in front of the imaginary plane that contains the first lower focal point 424. However, in other embodiments, the second lower focal point 425 and the third lower focal point 426 may be located behind the imaginary plane that contains the first lower focal point 424.

The lower light-emergent surface 423 of the lower lens assembly 42 further has two third sections 429 each of which is located at one side of a respective one of the second sections 428 of the lower lens assembly 42 that is opposite to the first section 427 of the lower lens assembly 42 in the transverse direction (X) . Each of the third sections 429 is rearwardly offset from the respective one of the second section 428.

The lower lens assembly 42 of the compound lens unit 4 includes five lower lenses 421. The first section 427 of the lower light-emergent surface 423 of the lower lens assembly 42 is formed by one of the lower lenses 421. The second sections 428 of the lower light-emergent surface 423 are respectively formed by another two of the lower lenses 421. The third sections 429 of the lower light-emergent surface 423 are respectively formed by the remaining two of the lower lenses 421. The one of the lower lenses 421 that forms the first section 427 and the another two of the lower lenses 421 that respectively form the second sections 428 cooperatively correspond with the first lower focal point 424 of the lower lens assembly 42. The remaining two of the lower lenses 421 respectively correspond with the second lower focal point 425 and the third lower focal point 426 of the lower lens assembly 42.

The light emitting unit 7 further includes a third light source 73 and a fourth light source 74 that substantially coincide with the second lower focal point 425 and the third lower focal point 426, respectively. The third light source 73 and the fourth light source 74 are respectively located at the protrusions 33 of the heat dissipating member 3 while the second light source 72 of the light emitting unit 7 is located between the protrusions 33. The third light source 73 and the fourth light source 74 respectively have a third light emitting surface 731 and a fourth light emitting surface 741 that face toward the lower light-incident surface 422 of the lower lens assembly 42. Each of the third light source 73 and the fourth light source 74 is operable to switch between an on-state in which light beams are generated, and an off-state in which light beams cease to be generated. When the first light source 71 and the second light source 72 are in the off-state and when the third light source 73 and the fourth light source 74 are in the on-state, the light beams generated by the third light source 73 and the fourth light source 74 enter the lower lens assembly 42 via the lower light-incident surface 422, and propagate through the lower lens assembly 42 and then exit the same via the lower light-emergent surface 423, so as to cooperatively serve as daytime running light rays.

Therefore, not only does the second embodiment have the same improvements as the first embodiment, it is additionally capable of emitting daytime running light rays.

Moreover, referring back to Figures 1 to 4, 8 and 9, each of the first embodiment and the second embodiment further includes a fixing frame 2 and is adapted to be used with a control unit (not shown) . The fixing frame 2 is disposed in front of the heat dissipating member 3, connects the heat dissipating member 3 to the compound lens unit 4, and has the compound lens unit 4 disposed thereon. The fixing frame 2 includes a first fixing plate 21 and two second fixing plates 22 respectively disposed on two opposite ends of the first fixing plate 21 in the transverse direction (X). Each of the second fixing plates 22 is substantially L-shaped, and has an upper end connected to the first fixing plate 21 in a manner that the fixing frame 2 is substantially inverted-U-shaped, and a lower end connected to the heat dissipating member 3. The upper lens 41 and the lower lens assembly 42 of the compound lens unit 4 are held fixedly among the first fixing plate 21 and the second fixing plates 22 in a manner that the inverted U-shaped fixing frame 2 extends along the compound lens unit 4. Each of the first light source 71, second light source 72, third light source 73 and fourth light source 74 of the light emitting unit 7 is operable by the control unit to switch between the on-state and the off-state. It is noted that there will be no further details described with respect to the structural and functional relationships between the control unit and the headlamp device since the control unit is not a component of either one of the first embodiment and the second embodiment of the headlamp device.

In summary, by virtue of the first light source 71 and the second light source 72 each being operable to switch between the on-state and the off-state, the first embodiment and the second embodiment of the headlamp device are both capable of emitting low beam light rays and high beam light rays and are switchable between the low-beam mode and the high-beam mode without a solenoid valve. Therefore, the headlamp device according to the invention may react relatively quickly when operated, and may have a relatively long service life so reliability of the headlamp device is improved. Consequently, the drawbacks of the prior art have been alleviated and the purpose of the invention can certainly be fulfilled.

In the description above, for the purposes of explanation, numerous specific details have been set forth in order to provide a thorough understanding of the embodiments. It will be apparent, however, to one skilled in the art, that one or more other embodiments may be practiced without some of these specific details. It should also be appreciated that reference throughout this specification to "one embodiment," "an embodiment," an embodiment with an indication of an ordinal number and so forth means that a particular feature, structure, or characteristic may be included in the practice of the invention. It should be further appreciated that in the description, various features are sometimes grouped together in a single embodiment, figure, or description thereof for the purpose of streamlining the invention and aiding in the understanding of various inventive aspects, and that one or more features or specific details from one embodiment may be practiced together with one or more features or specific details from another embodiment, where appropriate, in the practice of the invention, which is defined by the appended claims.

## Claims

1. A headlamp device comprising:
a compound lens unit (4) including
an upper lens (41) that has
an optical axis (A),
an upper light-incident surface (411),
an upper light-emergent surface (412), and
an upper focal point (413), said upper light-incident surface (411) and said upper light-emergent surface (412) being respectively located at two opposite sides of said upper lens (41) in a direction (Y) of the optical axis (A), said upper focal point (413) being located at one side of said upper light-incident surface (411) opposite to said upper light-emergent surface (412), and
a lower lens assembly (42) that is located below the optical axis (A), that includes a plurality of lower lenses (421), and that has
a lower light-incident surface (422) which is cooperatively formed by said lower lenses (421), which faces in a direction that is the same as that of said upper light-incident surface (411), and which is offset from said upper light-incident surface (411) along the direction (Y) of the optical axis (A),
a lower light-emergent surface (423) which is cooperatively formed by said lower lenses (421), which is opposite to said lower light-incident surface (422) in the direction (Y) of the optical axis (A), and which has
a first section (427), and
two second sections (428) respectively located at two opposite sides of said first section (427) in a transverse direction (X) transverse to the direction (Y) of the optical axis (A) and offset from said first section (427) along the direction (Y) of the optical axis (A), and
a first lower focal point (424) which is located at one side of said lower light-incident surface (422) opposite to said lower light-emergent surface (423) ;
a reflector (5) located at one side of said upper focal point (413) opposite to said upper light-incident surface (411), and having a reflecting surface (51) that is arc-shaped and that has
a first reflecting focal point (511) and a second reflecting focal point (512) which are respectively distal from and proximate to said upper light-incident surface (411) of said upper lens (41), said second reflecting focal point (512) coinciding with said upper focal point (413) of said upper lens (41);
a blocking board (6) having a top end at which said second reflecting focal point (512) is located; and
a light emitting unit (7); said light emitting unit (7) including
a first light source (71) that has a first light emitting surface (711) which faces upwardly, and that substantially coincides with said first reflecting focal point (511) of said reflector (5), and
a second light source (72) that has a second light emitting surface (721) which faces toward said lower light-incident surface (422) of said lower lens assembly (42), and that substantially coincides with said first lower focal point (424) of said lower lens assembly (42), each of said first light source (71) and said second light source (72) being operable to switch between an on-state in which light beams are generated, and an off-state in which light beams cease to be generated;
wherein, when said first light source (71) is in the on-state and when said second light source (72) is in the off-state, the light beams generated by said first light source (71) are reflected by said reflecting surface (51) of said reflector (5) such that some of the light beams are blocked by said blocking board (6) while the remaining light beams travel into said upper lens (41) through said upper light-incident surface (411) and exit said upper lens (41) through said upper light-emergent surface (412) to serve as low beam light rays; and
when said second light source (72) and said first light source (71) are in the on-state, the light beams generated by said second light source (72) travel into said lower lens assembly (42) through said lower light-incident surface (422), and exit said lower lens assembly (42) through said lower light-emergent surface (423), to cooperate with the light beams exiting said upper lens (41) through said upper light-emergent surface (412) to serve as high beam light rays.

2. The headlamp device as claimed in claim 1, **characterized in that**:
said lower lens assembly (42) of said compound lens unit (4) includes three of said lower lenses (421) ; and
said first section (427) of said lower light-emergent surface (423) of said lower lens assembly (42) is formed by one of said lower lenses (421), and said second sections (428) of said lower light-emergent surface (423) are respectively formed by the other two of said lower lenses (421).

3. The headlamp device as claimed in claim 1, **characterized in that**:
said lower lens assembly (42) of said compound lens unit (4) further has a second lower focal point (425) and a third lower focal point (426) respectively located at two opposite side of said first lower focal point (424) of said lower lens assembly (42) in the transverse direction (X), said second lower focal point (425) and said third lower focal point (426) being configured to not be on an imaginary plane that is perpendicular to the optical axis (A) and that contains said first lower focal point (424);
said upper light-emergent surface (412) is in front of said upper light-incident surface (411) of said upper lens (41) of said compound lens unit (4);
said lower light-emergent surface (423) of said lower lens assembly (42) further has two third sections (429) each of which is located on one side of a respective one of said second sections (428) of said lower lens assembly (42) that is opposite to said first section (427) of said lower lens assembly (42) in the transverse direction (X), each of said third sections (429) being rearwardly offset from the respective one of said second section (428);
said light emitting unit (7) further includes a third light source (73) and a fourth light source (74) respectively and substantially coinciding with said second lower focal point (425) and said third lower focal point (426), said third light source (73) and said fourth light source (74) respectively having a third light emitting surface (731) and a fourth light emitting surface (741) that face toward said lower light-incident surface (422) of said lower lens assembly (42), each of said third light source (73) and said fourth light source (74) being operable to switch between an on-state where light beams are generated, and an off-state where light beams cease to be generated; and
when said first light source (71) and said second light source (72) are in the off-state and when said third light source (73) and said fourth light source (74) are in the on-state, the light beams generated by said third light source (73) and said fourth light source (74) travel into said lower lens assembly (42) through said lower light-incident surface (422) and exit said lower lens assembly (42) through said lower light-emergent surface (423) to cooperatively serve as daytime running light rays.

4. The headlamp device as claimed in claim 3, **characterized in that**:
said lower lens assembly (42) of said compound lens unit (4) includes five of said lower lenses (421);
said first section (427) of said lower light-emergent surface (423) of said lower lens assembly (42) is formed by one of said lower lenses (421);
said second sections (428) of said lower light-emergent surface (423) are respectively formed by another two of said lower lenses (421);
said third section (429) of said lower light-emergent surface (423) are respectively formed by the remaining two of said lower lenses (421); and
the remaining two of said lower lenses (421) respectively correspond with said second lower focal point (425) and said third lower focal point (426) of said lower lens assembly (42).

5. The headlamp device as claimed in claim 3, **characterized in that** said second lower focal point (425) and said third lower focal point (426) of said lower lens assembly (42) of said compound lens unit (4) are located in front of the imaginary plane that contains said first lower focal point (424) of said lower lens assembly (42).

6. The headlamp device as claimed in any one of claims 1 to 4, **characterized in that**:
said upper light-emergent surface (412) is in front of said upper light-incident surface (411) of said upper lens (41) of said compound lens unit (4); and
said lower light-incident surface (422) of said lower lens assembly (42) of said compound lens unit (4) is rearwardly offset from said upper light-incident surface (411) of said upper lens (41).

7. The headlamp device as claimed in claim 6, **characterized in that** a distance between said upper light-incident surface (411) of said upper lens (41) and said lower light-incident surface (422) of said lower lens assembly (42) in the direction (Y) of the optical axis (A) ranges from 5 to 30 millimeters.

8. The headlamp device as claimed in any one of claims 1 to 4, **characterized in that** said upper lens (41) and said lower lenses (421) of said lower lens assembly (42) are formed as one-piece.

9. The headlamp device as claimed in any one of claims 1 to 4, **characterized in that** said light emitting unit (7) is a light-emitting diode made of at least one semiconductor die.

10. The headlamp device as claimed in any one of claims 1 to 4, further **characterized by** a heat dissipating member (3) on which said reflector (5), said blocking board (6) and said light-emitting unit (7) are disposed.

## Patentansprüche

1. Scheinwerfervorrichtung, umfassend:
eine Verbundlinseneinheit (4), die
eine obere Linse (41) enthält, die
eine optische Achse (A),
eine obere Lichteinfallsoberfläche (411),
eine obere Lichtaustrittsoberfläche (412) und
einen oberen Brennpunkt (413) aufweist, wobei die obere Lichteinfallsoberfläche (411) und die obere Lichtaustrittsoberfläche (412) sich jeweils auf zwei gegenüberliegenden Seiten der oberen Linse (41) in einer Richtung (Y) der optischen Achse (A) befinden, wobei der obere Brennpunkt (413) sich auf einer Seite der oberen Lichteinfallsoberfläche (411) gegenüber der oberen Lichtaustrittsoberfläche (412) befindet, und
eine untere Linsenanordnung (42), die sich unterhalb der optischen Achse (A) befindet und eine Mehrzahl von unteren Linsen (421) enthält und
eine untere Lichteinfallsoberfläche (422), die von den unteren Linsen (421) gemeinsam gebildet wird und in eine Richtung zeigt, die dieselbe wie die der oberen Lichteinfallsoberfläche (411) ist, und die von der oberen Lichteinfallsoberfläche (411) entlang der Richtung (Y) der optischen Achse (A) versetzt ist,
eine untere Lichtaustrittsoberfläche (423) aufweist, die von den unteren Linsen (421) gemeinsam gebildet wird und der unteren Lichteinfallsoberfläche (422) in der Richtung (Y) der optischen Achse (A) gegenüberliegt, und
welche einen ersten Abschnitt (427) und
zwei zweite Abschnitte (428) aufweist, die sich jeweils an zwei gegenüberliegenden Seiten des ersten Abschnitts (427) in einer Querrichtung (X) quer zur Richtung (Y) der optischen Achse (A) befinden und von dem ersten Abschnitt (427) entlang der Richtung (Y) der optischen Achse (A) versetzt sind, und
einen ersten unteren Brennpunkt (424), der sich auf einer Seite der unteren Lichteinfallsoberfläche (422) gegenüber der unteren Lichtaustrittsoberfläche (423) befindet;
einen Reflektor (5), der sich auf einer Seite des oberen Brennpunkts (413) gegenüber der oberen Lichteinfallsoberfläche (411) befindet und eine reflektierende Oberfläche (51) aufweist, die bogenförmig ist und
einen ersten reflektierenden Brennpunkt (511) und einen zweiten reflektierenden Brennpunkt (512) aufweist, die distal von der oberen Lichteinfallsoberfläche (411) der oberen Linse (41) bzw. proximal zu dieser liegen, wobei der zweite reflektierende Brennpunkt (512) mit dem oberen Brennpunkt (413) der oberen Linse (41) zusammenfällt;
eine Blockierplatte (6), die ein oberes Ende aufweist, an dem sich der zweite reflektierende Brennpunkt (512) befindet; und
eine lichtemittierende Einheit (7);
wobei die lichtemittierende Einheit (7)
eine erste Lichtquelle (71), die eine erste lichtemittierende Oberfläche (711) aufweist, die nach oben zeigt und die im Wesentlichen mit dem ersten reflektierenden Brennpunkt (511) des Reflektors (5) zusammenfällt, und
eine zweite Lichtquelle (72) enthält, die eine zweite lichtemittierende Oberfläche (721) aufweist, die zur unteren Lichteinfallsoberfläche (422) der unteren Linsenanordnung (42) zeigt und die im Wesentlichen mit dem ersten unteren Brennpunkt (424) der unteren Linsenanordnung (42) zusammenfällt, wobei die erste Lichtquelle (71) und die zweite Lichtquelle (72) jeweils betreibbar sind, um zwischen einem Ein-Zustand, in dem Lichtstrahlen erzeugt werden, und einem Aus-Zustand, in dem keine Lichtstrahlen mehr erzeugt werden, umzuschalten;
wobei, wenn die erste Lichtquelle (71) im Ein-Zustand ist und wenn die zweite Lichtquelle (72) im Aus-Zustand ist, die von der ersten Lichtquelle (71) erzeugten Lichtstrahlen von der reflektierenden Oberfläche (51) des Reflektors (5) derart reflektiert werden, dass ein Teil der Lichtstrahlen durch die Blockierplatte (6) blockiert werden, während die übrigen Lichtstrahlen durch die obere Lichteinfallsoberfläche (411) in die obere Linse (41) gelangen und durch die obere Lichtaustrittsoberfläche (412) aus der oberen Linse (41) austreten, um als Abblendlichtstrahlen zu dienen; und
wenn die zweite Lichtquelle (72) und die erste Lichtquelle (71) im Ein-Zustand sind, die von der zweiten Lichtquelle (72) erzeugten Lichtstrahlen durch die untere Lichteinfallsoberfläche (422) in die untere Linsenanordnung (42) gelangen und durch die untere Lichtaustrittsoberfläche (423) aus der unteren Linsenanordnung (42) austreten, um mit den Lichtstrahlen, die durch die obere Lichtaustrittsoberfläche (412) aus der oberen Linse (41) austreten, zusammenzuwirken, um als Fernlichtstrahlen zu dienen.

2. Scheinwerfervorrichtung nach Anspruch 1, **dadurch gekennzeichnet, dass**:
die untere Linsenanordnung (42) der Verbundlinseneinheit (4) drei der unteren Linsen (421) enthält; und
der erste Abschnitt (427) der unteren Lichtaustrittsoberfläche (423) der unteren Linsenanordnung (42) durch eine der unteren Linsen (421) gebildet wird,
und die zweiten Abschnitte (428) der unteren Lichtaustrittsoberfläche (423) jeweils durch die beiden anderen der unteren Linsen (421) gebildet werden.

3. Scheinwerfervorrichtung nach Anspruch 1,
**dadurch gekennzeichnet, dass**:
die untere Linsenanordnung (42) der Verbundlinseneinheit (4) ferner einen zweiten unteren Brennpunkt (425) und einen dritten unteren Brennpunkt (426) aufweist, die sich jeweils auf zwei gegenüberliegenden Seiten des ersten unteren Brennpunkts (424) der unteren Linsenanordnung (42) in der Querrichtung (X) befinden, wobei der zweite untere Brennpunkt (425) und der dritte untere Brennpunkt (426) so konfiguriert sind, dass sie nicht auf einer imaginären Ebene liegen, die senkrecht zur optischen Achse (A) ist und den ersten unteren Brennpunkt (424) enthält;
die obere Lichtaustrittsoberfläche (412) vor der oberen Lichteinfallsoberfläche (411) der oberen Linse (41) der Verbundlinseneinheit (4) ist;
die untere Lichtaustrittsoberfläche (423) der unteren Linsenanordnung (42) ferner zwei dritte Abschnitte (429) aufweist, die sich jeweils auf einer Seite eines jeweiligen der zweiten Abschnitte (428) der unteren Linsenanordnung (42) befinden, der dem ersten Abschnitt (427) der unteren Linsenanordnung (42) in der Querrichtung (X) gegenüberliegt, wobei jeder der dritten Abschnitte (429) von dem jeweiligen der zweiten Abschnitte (428) nach hinten versetzt ist;
die lichtemittierende Einheit (7) ferner eine dritte Lichtquelle (73) bzw. eine vierte Lichtquelle (74) enthält und im Wesentlichen mit dem zweiten unteren Brennpunkt (425) und dem dritten unteren Brennpunkt (426) zusammenfällt, wobei die dritte Lichtquelle (73) und die vierte Lichtquelle (74) eine dritte lichtemittierende Oberfläche (731) bzw. eine vierte lichtemittierende Oberfläche (741) aufweisen, die zur unteren Lichteinfallsoberfläche (422) der unteren Linsenanordnung (42) zeigen, wobei die dritte Lichtquelle (73) und die vierte Lichtquelle (74) jeweils betreibbar sind, um zwischen einem Ein-Zustand, in dem Lichtstrahlen erzeugt werden, und einem Aus-Zustand, in dem keine Lichtstrahlen mehr erzeugt werden, umzuschalten; und
wenn die erste Lichtquelle (71) und die zweite Lichtquelle (72) in dem Aus-Zustand sind und wenn die dritte Lichtquelle (73) und die vierte Lichtquelle (74) in dem Ein-Zustand sind, die von der dritten Lichtquelle (73) und der vierten Lichtquelle (74) erzeugten Lichtstrahlen durch die untere Lichteinfallsoberfläche (422) in die untere Linsenanordnung (42) gelangen und durch die untere Lichtaustrittsoberfläche (423) aus der die unteren Linsenanordnung (42) austreten, um gemeinsam als Tagfahrlichtstrahlen zu dienen.

4. Scheinwerfervorrichtung nach Anspruch 3,
**dadurch gekennzeichnet, dass**:
die untere Linsenanordnung (42) der Verbundlinseneinheit (4) fünf der unteren Linsen (421) enthält;
der erste Abschnitt (427) der unteren Lichtaustrittsoberfläche (423) der unteren Linsenanordnung (42) durch eine der unteren Linsen (421) gebildet wird;
die zweiten Abschnitte (428) der unteren Lichtaustrittsoberfläche (423) jeweils durch zwei weitere der unteren Linsen (421) gebildet werden;
der dritte Abschnitt (429) der unteren Lichtaustrittsoberfläche (423) jeweils durch die verbleibenden zwei der unteren Linsen (421) gebildet wird; und
die verbleibenden zwei der unteren Linsen (421) jeweils dem zweiten unteren Brennpunkt (425) und dem dritten unteren Brennpunkt (426) der unteren Linsenanordnung (42) entsprechen.

5. Scheinwerfervorrichtung nach Anspruch 3, **dadurch gekennzeichnet, dass** der zweite untere Brennpunkt (425) und der dritte untere Brennpunkt (426) der unteren Linsenanordnung (42) der Verbundlinseneinheit (4) sich vor der imaginären Ebene befinden, die den ersten unteren Brennpunkt (424) der unteren Linsenanordnung (42) enthält.

6. Scheinwerfervorrichtung nach einem der Ansprüche 1 bis 4, **dadurch gekennzeichnet, dass**:
die obere Lichtaustrittsoberfläche (412) vor der oberen Lichteinfallsoberfläche (411) der oberen Linse (41) der Verbundlinseneinheit (4) ist; und
die untere Lichteinfallsoberfläche (422) der unteren Linsenanordnung (42) der Verbundlinseneinheit (4) von der oberen Lichteinfallsoberfläche (411) der oberen Linse (41) nach hinten versetzt ist.

7. Scheinwerfervorrichtung nach Anspruch 6, **dadurch gekennzeichnet, dass** ein Abstand zwischen der oberen Lichteinfallsoberfläche (411) der oberen Linse (41) und der unteren Lichteinfallsoberfläche (422) der unteren Linsenanordnung (42) in der Richtung (Y) der optischen Achse (A) 5 bis 30 Millimeter beträgt.

8. Scheinwerfervorrichtung nach einem der Ansprüche 1 bis 4, **dadurch gekennzeichnet, dass** die obere Linse (41) und die unteren Linsen (421) der unteren Linsenanordnung (42) einteilig ausgebildet sind.

9. Scheinwerfervorrichtung nach einem der Ansprüche 1 bis 4, **dadurch gekennzeichnet, dass** die lichtemittierende Einheit (7) eine Leuchtdiode ist, die aus mindestens einem Halbleiterchip besteht.

10. Scheinwerfervorrichtung nach einem der Ansprüche 1 bis 4, ferner **gekennzeichnet durch** ein Wärmeableitungselement (3), auf dem der Reflektor (5), die Blockierplatte (6) und die lichtemittierende Einheit (7) angeordnet sind.

## Revendications

1. Un dispositif de lampe frontale comprenant :
une unité de lentille composée (4) comprenant
une lentille supérieure (41) qui a
un axe optique (A),
une surface supérieure d'incidence de la lumière (411),
une surface supérieure d'émergence de la lumière (412), et
un point focal supérieur (413), ladite surface supérieure d'incidence de la lumière (411) et ladite surface supérieure d'émergence de la lumière (412) étant respectivement situées sur deux côtés opposés de ladite lentille supérieure (41) dans une direction (Y) de l'axe optique (A), ledit point focal supérieur (413) étant situé sur un côté de ladite surface supérieure d'incidence de la lumière (411) opposé à ladite surface supérieure d'émergence de la lumière (412), et
un ensemble de lentilles inférieures (42) situé sous l'axe optique (A), qui comprend plusieurs lentilles inférieures (421) et qui présente les caractéristiques suivantes
une surface inférieure d'incidence de la lumière (422) formée par lesdites lentilles inférieures (421), orientée dans une direction identique à celle de ladite surface supérieure d'incidence de la lumière (411) et décalée par rapport à ladite surface supérieure d'incidence de la lumière (411) le long de la direction (Y) de l'axe optique (A),
une surface inférieure d'émergence de la lumière (423) formée en coopération par lesdites lentilles inférieures (421), qui est opposée à ladite surface inférieure d'incidence de la lumière (422) dans la direction (Y) de l'axe optique (A), et qui présente les caractéristiques suivantes
une première section (427), et
deux deuxièmes sections (428) respectivement situées sur deux côtés opposés de ladite première section (427) dans une direction transversale (X) par rapport à la direction (Y) de l'axe optique (A) et décalées par rapport à ladite première section (427) le long de la direction (Y) de l'axe optique (A), et
un premier point focal inférieur (424) situé sur un côté de la surface inférieure d'incidence de la lumière (422), à l'opposé de la surface inférieure d'émergence de la lumière (423) ;
un réflecteur (5) situé sur un côté dudit point focal supérieur (413) à l'opposé de ladite surface supérieure d'incidence de la lumière (411), et ayant une surface réfléchissante (51) en forme d'arc et présentant les caractéristiques suivantes
un premier point focal réfléchissant (511) et un second point focal réfléchissant (512) qui sont respectivement distants et proches de ladite surface supérieure d'incidence de la lumière (411) de ladite lentille supérieure (41), ledit second point focal réfléchissant (512) coïncidant avec ledit point focal supérieur (413) de ladite lentille supérieure (41) ;
une planche de blocage (6) ayant une extrémité supérieure où se trouve ledit second point focal réfléchissant (512) ; et
une unité d'émission de lumière (7) ;
ladite unité d'émission de lumière (7) comprenant
une première source de lumière (71) qui présente une première surface d'émission de lumière (711) orientée vers le haut et qui coïncide sensiblement avec le premier point focal réfléchissant (511) dudit réflecteur (5), et
une deuxième source de lumière (72) qui a une deuxième surface d'émission de lumière (721) qui fait face à ladite surface inférieure d'incidence de la lumière (422) dudit ensemble de lentilles inférieures (42), et qui coïncide sensiblement avec ledit premier point focal inférieur (424) dudit ensemble de lentilles inférieures (42), chacune de ladite première source de lumière (71) et de ladite deuxième source de lumière (72) pouvant passer d'un état allumé dans lequel des faisceaux de lumière sont générés à un état éteint dans lequel les faisceaux de lumière cessent d'être générés ;
dans lequel, lorsque ladite première source lumineuse (71) est à l'état passant et lorsque ladite seconde source lumineuse (72) est à l'état bloqué, les faisceaux lumineux générés par ladite première source lumineuse (71) sont réfléchis par ladite surface réfléchissante (51) dudit réflecteur (5) de sorte que certains des faisceaux lumineux sont bloqués par ladite carte de blocage (6) tandis que les faisceaux lumineux restants se déplacent dans ladite lentille supérieure (41) à travers ladite surface supérieure d'incidence de la lumière (411) et sortent de ladite lentille supérieure (41) à travers ladite surface supérieure d'émergence de la lumière (412) pour servir de rayons lumineux de faible intensité ; et
lorsque ladite deuxième source lumineuse (72) et ladite première source lumineuse (71) sont allumées, les faisceaux lumineux générés par ladite deuxième source lumineuse (72) pénètrent dans ledit ensemble de lentilles inférieures (42) par ladite surface inférieure d'incidence de la lumière (422) et sortent dudit ensemble de lentilles inférieures (42) par ladite surface inférieure d'émergence de la lumière (423), pour coopérer avec les faisceaux lumineux sortant de ladite lentille supérieure (41) par ladite surface supérieure d'émergence de la lumière (412), afin de servir de rayons lumineux à faisceau élevé.

2. Projecteur selon la revendication 1, **caractérisé par le fait que** :
ledit ensemble de lentilles inférieures (42) de ladite unité de lentilles composées (4) comprend trois desdites lentilles inférieures (421) ; et
ladite première section (427) de ladite surface inférieure d'émergence de la lumière (423) dudit ensemble de lentilles inférieures (42) est formée par l'une desdites lentilles inférieures (421), et lesdites deuxièmes sections (428) de ladite surface inférieure d'émergence de la lumière (423) sont respectivement formées par les deux autres desdites lentilles inférieures (421).

3. Projecteur selon la revendication 1, **caractérisé par le fait que** :
ledit ensemble de lentilles inférieures (42) de ladite unité de lentilles composées (4) comporte en outre un deuxième foyer inférieur (425) et un troisième foyer inférieur (426) respectivement situés à deux côtés opposés dudit premier foyer inférieur (424) dudit ensemble de lentilles inférieures (42) dans la direction transversale (X), ledit deuxième foyer inférieur (425) et ledit troisième foyer inférieur (426) étant configurés pour ne pas se trouver sur un plan imaginaire perpendiculaire à l'axe optique (A) et qui contient ledit premier foyer inférieur (424) ;
ladite surface supérieure d'émergence de la lumière (412) se trouve devant ladite surface supérieure d'incidence de la lumière (411) de ladite lentille supérieure (41) de ladite unité de lentille composée (4) ;
ladite surface inférieure d'émergence de la lumière (423) dudit ensemble de lentilles inférieures (42) comporte en outre deux troisièmes sections (429) dont chacune est située sur un côté de l'une respective desdites deuxièmes sections (428) dudit ensemble de lentilles inférieures (42) qui est opposée à ladite première section (427) dudit ensemble de lentilles inférieures (42) dans la direction transversale (X), chacune desdites troisièmes sections (429) étant décalée vers l'arrière par rapport à l'une respective de ladite deuxième section (428) ;
ladite unité d'émission de lumière (7) comprend en outre une troisième source de lumière (73) et une quatrième source de lumière (74) coïncidant respectivement et sensiblement avec ledit deuxième point focal inférieur (425) et ledit troisième point focal inférieur (426), Ladite troisième source lumineuse (73) et ladite quatrième source lumineuse (74) ont respectivement une troisième surface d'émission lumineuse (731) et une quatrième surface d'émission lumineuse (741) qui font face à ladite surface inférieure d'incidence lumineuse (422) dudit ensemble de lentilles inférieur (42), chacune de ladite troisième source lumineuse (73) et de ladite quatrième source lumineuse (74) pouvant être utilisée pour passer d'un état allumé où des faisceaux lumineux sont générés à un état éteint où les faisceaux lumineux cessent d'être générés ; et
lorsque ladite première source lumineuse (71) et ladite deuxième source lumineuse (72) sont à l'état éteint et lorsque ladite troisième source lumineuse (73) et ladite quatrième source lumineuse (74) sont à l'état allumé, les faisceaux lumineux générés par ladite troisième source lumineuse (73) et ladite quatrième source lumineuse (74) se déplacent dans ledit ensemble de lentilles inférieur (42) à travers ladite surface inférieure d'incidence de la lumière (422) et sortent dudit ensemble de lentilles inférieur (42) à travers ladite surface inférieure d'émergence de la lumière (423) pour servir conjointement de rayons d'éclairage de jour.

4. Projecteur selon la revendication 3, **caractérisé par le fait que** :
ledit ensemble de lentilles inférieures (42) de ladite unité de lentilles composées (4) comprend cinq desdites lentilles inférieures (421) ;
ladite première section (427) de ladite surface inférieure d'émergence de la lumière (423) dudit ensemble de lentilles inférieures (42) est formée par l'une desdites lentilles inférieures (421) ;
lesdites secondes sections (428) de ladite surface inférieure d'émergence de la lumière (423) sont respectivement formées par deux autres desdites lentilles inférieures (421) ;
ladite troisième section (429) de ladite surface inférieure d'émergence de la lumière (423) est formée respectivement par les deux lentilles inférieures restantes (421) ; et
les deux autres desdites lentilles inférieures (421) correspondent respectivement au deuxième point focal inférieur (425) et au troisième point focal inférieur (426) dudit ensemble de lentilles inférieures (42).

5. Projecteur selon la revendication 3, **caractérisé par le fait que** le deuxième foyer inférieur (425) et le troisième foyer inférieur (426) de l'ensemble de lentilles inférieures (42) de l'unité de lentilles composées (4) sont situés en avant du plan imaginaire qui contient le premier foyer inférieur (424) de l'ensemble de lentilles inférieures (42).

6. Projecteur selon l'une des revendications 1 à 4, **caractérisé par le fait que** :
ladite surface supérieure d'émergence de la lumière (412) se trouve devant ladite surface supérieure d'incidence de la lumière (411) de ladite lentille supérieure (41) de ladite unité de lentille composée (4) ; et
Ladite surface inférieure d'incidence de la lumière (422) dudit ensemble de lentilles inférieures (42) de ladite unité de lentilles composées (4) est décalée vers l'arrière par rapport à ladite surface supérieure d'incidence de la lumière (411) de ladite lentille supérieure (41).

7. Projecteur selon la revendication 6, **caractérisé par le fait que** la distance entre la surface supérieure d'incidence de la lumière (411) de la lentille supérieure (41) et la surface inférieure d'incidence de la lumière (422) de la lentille inférieure (42) dans la direction (Y) de l'axe optique (A) est comprise entre 5 et 30 millimètres.

8. Dispositif de projecteur selon l'une quelconque des revendications 1 à 4, **caractérisé en ce que** ladite lentille supérieure (41) et lesdites lentilles inférieures (421) dudit ensemble de lentilles inférieures (42) sont formées d'une seule pièce.

9. Dispositif de projecteur selon l'une quelconque des revendications 1 à 4, **caractérisé en ce que** l'unité émettrice de lumière (7) est une diode électroluminescente constituée d'au moins une puce semi-conductrice.

10. Dispositif de projecteur selon l'une quelconque des revendications 1 à 4, **caractérisé en outre par** un élément dissipateur de chaleur (3) sur lequel sont disposés ledit réflecteur (5), ladite plaque de blocage (6) et ladite unité émettrice de lumière (7).
